(19) Europäisches Patentamt
European Patent Office
Office européen des brevets

(11) EP 4 226 779 A1

(12) **EUROPEAN PATENT APPLICATION**
published in accordance with Art. 153(4) EPC

(43) Date of publication:
16.08.2023 Bulletin 2023/33

(51) International Patent Classification (IPC):
$A24D\ 1/20^{(2020.01)}$    $A24F\ 40/46^{(2020.01)}$
$A24F\ 40/20^{(2020.01)}$    $G01N\ 25/20^{(2006.01)}$

(21) Application number: 22888605.7

(22) Date of filing: 27.04.2022

(86) International application number:
PCT/CN2022/089547

(87) International publication number:
WO 2023/123772 (06.07.2023 Gazette 2023/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.12.2021 CN 202111655975

(71) Applicants:
• Shanghai Tobacco Group Co., Ltd.
Shanghai 200082 (CN)

• Shanghai New Tobacco Product
Research Institute Co., Ltd
Shanghai 200082 (CN)

(72) Inventors:
• WANG, Xu
Shanghai 200082 (CN)
• LIU, Cheng
Shanghai 200082 (CN)
• GAO, Lina
Shanghai 200082 (CN)

(74) Representative: Nederlandsch Octrooibureau
P.O. Box 29720
2502 LS The Hague (NL)

(54) **AEROSOL-GENERATING ARTICLE, PREPARATION METHOD, AND INSPECTION METHOD**

(57) The present invention provides an aerosol-generating product used with an electrically heated aerosol-generating device and a preparation method and inspection method thereof. The aerosol-generating product includes a smoking section in which a smoking material is contained. The electrically heated aerosol-generating device includes a heating element. The heating element is insertable into the smoking section. The maximum heat conduction area thermal resistance $\frac{\delta}{\lambda_e}$ of the smoking section satisfies: $0.01 < \frac{\delta}{\lambda_e} < 0.06$ , where $\delta$ represents the maximum radial heating distance of the smoking section, and the unit is m; and Åe represents the effective heat conduction coefficient of the smoking section, and the unit is W/m K. The aerosol-generating product of the present invention has favorable heat transfer performance and high heating efficiency.

Fig. 1

EP 4 226 779 A1

**Description**

**TECHNICAL FIELD**

The present invention relates to the field of heat-not-burn, and in particular to an aerosol-generating product used with an electrically heated aerosol-generating device and a preparation method and inspection method of the aerosol-generating product.

**BACKGROUND**

With the continuous in-depth research on smoking and health, some scientific studies have shown that most of harmful substances in cigarettes are produced by the thermal cracking of tobacco when it burns. In recent years, a variety of new tobacco products having a heat-not-burn concept have emerged one after another. For these new tobacco products, an aerosol-generating product is heated in an electric heating aerosol-generating device matched therewith to generate aerosol for intake by consumers. Because the burning of tobacco is avoided, the intake of the harmful substances by consumers can be reduced. In a working process, a heater conducts heat to a tobacco material, and then to a packaging material from the tobacco material. A cigarette produces the aerosol in an electric heating manner. For example, the heater is inserted into the center of the cigarette to heat it, which tends to result in a big temperature difference between the inside and the outside. As a result, after the heater heats the cigarette, part of the inside of the cigarette has been carbonized at high temperature, but an atomizing agent at the outside is not completely atomized, which affects the release effect of the aerosol and the overall smoking experience of consumers. Therefore, it is necessary to study the radial heat transfer performance of cigarettes, and it is desired to provide an aerosol-generating product which can realize the optimization of heat conduction.

**SUMMARY**

The present invention provides an aerosol-generating product and a preparation method and inspection method of the aerosol-generating product, in order to solve the above technical problems.

An aerosol-generating product used with an electrically heated aerosol-generating device includes a smoking section in which a smoking material is contained. The electrically heated aerosol-generating device includes a heating element. The heating element is insertable into the smoking section. The maximum heat conduction area thermal resistance $\frac{\delta}{\lambda_e}$ of the smoking section satisfies: $0.01<\frac{\delta}{\lambda_e}<0.06$; and the unit of $\frac{\delta}{\lambda_e}$ is m²·K/W, where

$\delta$: the maximum radial heating distance of the smoking section in the unit of m, representing the distance between the surface of the heating element and the smoking material at the farthest point in the normal direction of the surface;

$\lambda_e$: the effective heat conduction coefficient of the smoking section in the unit of W/m·K, satisfying: $\lambda_e=\varepsilon\lambda_a+(1-\varepsilon)\lambda_s$, where

$\varepsilon$: the void ratio of the smoking section, representing the ratio of the void volume of the smoking section to the total volume of the smoking section;

$\lambda_a$: the heat conduction coefficient of the void of the smoking section in the unit of W/m·K; and

$\lambda_s$: the heat conduction coefficient of the smoking material in the smoking section in the unit of W/m·K.

The aerosol-generating product according to the above solution can realize the optimization of heat transfer, thereby increasing the heating efficiency and improving the release effect of aerosol.

Optionally, the heat conduction coefficient $\lambda_s$ of the smoking material in the smoking section is the heat conduction coefficient of the smoking material at standard atmospheric pressure and room temperature measured by a thermal constant analyzer, and the heat conduction coefficient $\lambda_a$ of the void of the smoking section is the heat conduction coefficient of air gaps within the smoking material at standard atmospheric pressure and room temperature.

Optionally, the heat conduction coefficient $\lambda_a$ of the void of the smoking section is 0.026 W/m·K, and the smoking section satisfies: $0.01 < \frac{\delta}{0.026\varepsilon+(1-\varepsilon)\lambda_s} < 0.04$.

Optionally, the smoking section satisfies $0.015 < \frac{\delta}{0.026\varepsilon+(1-\varepsilon)\lambda_s} < 0.025$.

Optionally, the void ratio ε of the smoking section satisfies: $\varepsilon=\frac{mV_s}{Vm_s}$, where $m_s$ is the mass of the whole smoking material obtained at standard atmospheric pressure and room temperature; $V_s$ is the volume of the whole smoking material at standard atmospheric pressure and room temperature; m is the mass of the smoking section at standard atmospheric pressure and room temperature, and V is the volume of the smoking section at standard atmospheric pressure and room temperature.

Optionally, the void ratio ε of the smoking section satisfies 0.2<ε<0.6.

Optionally, the maximum radial heating distance δ of the smoking section is 0.0025-0.0028 m.

Optionally, the heat conduction coefficient ÅS of the smoking material in the smoking section is 0.07-0.32 W/m·K.

Optionally, the heating element is a central heating element, and the smoking section is suitable for central heating.

The present invention proposes an aerosol-generating system, including any above-mentioned aerosol-generating product and an electrically heated aerosol-generating device suitable for heating the aerosol-generating product.

The present invention also proposes a preparation method of an aerosol-generating product used with an electrically heated aerosol-generating device, including the following steps:

> preparing a smoking section satisfying conditions: preparing a smoking material capable of producing aerosol through electric heating, assembling the smoking material within the smoking section, the electrically heated aerosol-generating device including a heating element,
> the heating element being insertable into the smoking section; detecting the maximum heat conduction area thermal resistance $\frac{\delta}{\lambda_e}$ of the smoking section; adjusting the smoking section, so that the maximum heat conduction area thermal resistance $\frac{\delta}{\lambda_e}$ of the smoking section satisfies: $0.01<\frac{\delta}{\lambda_e}<0.06$, and the unit of $\frac{\delta}{\lambda_e}$ is m²·K/W, where
>
> > δ: the maximum radial heating distance of the smoking section in the unit of m, representing the distance between the surface of the heating element and the smoking material at the farthest point in the normal direction of the surface;
> > $\lambda_e$: the effective heat conduction coefficient of the smoking section in the unit of W/m·K, satisfying: $\lambda_e=\varepsilon\lambda_a+(1-\varepsilon)\lambda_s$, where
> > ε: the void ratio of the smoking section, representing the ratio of the void volume of the smoking section to the total volume of the smoking section;
> > $\lambda_a$: the heat conduction coefficient of the void of the smoking section in the unit of W/m·K; and
> > $\lambda_s$: the heat conduction coefficient of the smoking material in the smoking section in the unit of W/m·K; and
>
> preparing the smoking section satisfying the conditions into the aerosol-generating product.

According to the preparation method of the aerosol-generating product of the present invention, the maximum heat conduction area thermal resistance $\frac{\delta}{\lambda_e}$ is used as a measurement standard in the preparation process, which is beneficial to ensure the heat transfer performance of the aerosol-generating product.

Optionally, the heat conduction coefficient of the smoking material at standard atmospheric pressure and room temperature is measured by a thermal constant analyzer, and is recorded as the heat conduction coefficient ÅS of the smoking material in the smoking section; and the heat conduction coefficient of air gaps within the smoking material at standard atmospheric pressure and room temperature is measured, and is recorded as the heat conduction coefficient $\lambda_a$ of the void of the smoking section.

Optionally, the heat conduction coefficient $\lambda_a$ of the void of the smoking section is 0.026 W/m K, and the smoking section is prepared, so that the smoking section satisfies: $0.01 < \frac{\delta}{0.026\varepsilon+(1-\varepsilon)\lambda_s} < 0.04$.

Optionally, the smoking section is prepared, so that the smoking section satisfies: $0.015 < \frac{\delta}{0.026\varepsilon+(1-\varepsilon)\lambda_s} < 0.025$.

Optionally, the mass of the whole smoking material obtained at standard atmospheric pressure and room temperature is recorded as $m_s$; the volume of the whole smoking material obtained at standard atmospheric pressure and room temperature is recorded as $V_s$; the mass of the smoking section obtained at standard atmospheric pressure and room temperature is recorded as m; the volume of the smoking section obtained at standard atmospheric pressure and room temperature is recorded as V; and the void ratio $\varepsilon$ of the smoking section is obtained in the following manner:

$$\varepsilon = \frac{mV_s}{Vm_s}.$$

Optionally, the void ratio $\varepsilon$ of the smoking section is adjusted as $0.2 < \varepsilon < 0.6$.

Optionally, the maximum radial heating distance $\delta$ of the smoking section is adjusted as 0.0025-0.0028 m.

Optionally, the heat conduction coefficient ÅS of the smoking material in the smoking section is adjusted as 0.07-0.32 W/m·K.

Optionally, the heating element is a central heating element, and the smoking section is prepared to be suitable for central heating.

The present invention also proposes an inspection method of an aerosol-generating product. The aerosol-generating product is used with an electrically heated aerosol-generating device. The aerosol-generating product includes a smoking section in which a smoking material is contained. The electrically heated aerosol-generating device includes a heating element. The heating element is insertable into the smoking section. The following inspection steps are included:

obtaining the void ratio of the smoking section, which is recorded as $\varepsilon$ and represents the void ratio of the smoking section being the ratio of the void volume of the smoking section to the total volume of the smoking section; obtaining the heat conduction coefficient $\lambda_a$ of the void of the smoking section in the unit of W/m K; obtaining the heat conduction coefficient $\lambda_s$ of the smoking material in the smoking section in the unit of W/m K; and obtaining the effective heat conduction coefficient of the smoking section in the unit of W/m K through calculation according to a formula, wherein the effective heat conduction coefficient of the smoking section is recorded as $\lambda_e$, and the formula is $\lambda_e = \varepsilon\lambda_a + (1-\varepsilon)\lambda_s$; obtaining the distance between the surface of the heating element and the smoking material at the farthest point in the normal direction of the surface, the distance being the maximum radial heating distance $\delta$ of the smoking section in the unit of m; and dividing the maximum radial heating distance $\delta$ of the smoking section by the effective heat conduction coefficient $\lambda_e$ of the smoking section to obtain the maximum heat conduction area thermal resistance in the unit of m2·K/W; and

inspecting whether the maximum heat conduction area thermal resistance $\frac{\delta}{\lambda_e}$ satisfies: $0.01 < \frac{\delta}{\lambda_e} < 0.06$.

According to the new inspection method of the aerosol-generating product proposed by the present invention, the heat transfer performance of the aerosol-generating product is inspected by determining whether the maximum heat conduction area thermal resistance $\frac{\delta}{\lambda_e}$ is within the range, thereby providing a reliable standard for preparing the aerosol-generating product with excellent heating effect and aerosol release effect.

Optionally, obtaining of the heat conduction coefficient $\lambda_a$ of the void of the smoking section includes: measuring the heat conduction coefficient of air gaps within the smoking material at standard atmospheric pressure and room temperature, which is recorded as the heat conduction coefficient $\lambda_a$ of the void of the smoking section; and obtaining of the heat conduction coefficient $\lambda_s$ of the smoking material in the smoking section includes: measuring, by a thermal constant analyzer, the heat conduction coefficient of the smoking material at standard atmospheric pressure and room temperature, which is recorded as the heat conduction coefficient $\lambda_s$ of the smoking material in the smoking section.

Optionally, if the maximum heat conduction area thermal resistance $\frac{\delta}{\lambda_e}$ satisfies: $0.01 < \frac{\delta}{\lambda_e} < 0.06$, the aerosol-generating product including the smoking section or the smoking section is determined as being qualified, otherwise as being unqualified.

## BRIEF DESCRIPTION OF THE DRAWINGS

Fig. 1 shows a schematic view of the radial section of a smoking section of a specific embodiment of the present invention; and

Fig. 2 shows a schematic view of the radial section of a smoking section of another specific embodiment of the present invention.

**DETAILED DESCRIPTION**

The implementations of the present invention are described below through specific embodiments. Those skilled in the art can easily understand other advantages and effects of the present invention from the content disclosed in the specification. Although the description of the present invention will be introduced in conjunction with preferred embodiments, this does not mean that the features of the present invention are limited to the implementations. Rather, the purpose of introducing the present invention in conjunction with the implementations is to cover other options or modifications that may be extended based on the claims of the present invention. In order to provide an in-depth understanding of the present invention, the following description will contain many specific details. The present invention may also be implemented without using these details. In addition, in order to avoid confusing or obscuring the focus of the present invention, some specific details will be omitted from the description. It should be noted that in the case of no conflict, the embodiments in the present invention and the features in the embodiments may be combined with each other.

The term "smoking section" is used herein to describe a product containing a smoking material, and the smoking section can be heated to produce aerosol and deliver it to consumers. The term "smoking material" means a base material capable of releasing volatile compounds to generate the aerosol when heated. During use, the volatile compounds are released from the smoking material by heat transfer. The smoking section may be a solid smoking section. The smoking material may include a tobacco-containing material, which contains volatile tobacco flavor compounds released from the base material after heating. The smoking material may include a non-tobacco material. The smoking section may include an aerosol-forming agent. The aerosol-forming agent may include at least one of glycerol and propylene glycol. In the embodiment in which the smoking material is solid, the solid smoking material may include one or more of the following: powder, granules, pellets, chips, through tubes, strips or sheets, which contain one or more of the following: herbal plant leaves, tobacco leaves, tobacco rib pieces, reconstituted tobacco, homogenized tobacco, extruded tobacco and expanded tobacco. The solid smoking material may be in a loose form. The smoking section may include a rod of the solid smoking material. A packaging material can wrap the rod of the solid smoking section, and the packaging material includes paper.

It should be noted that in this specification, similar symbols and letters indicate similar items in the following drawings, so once an item is defined in one drawing, it does not need to be further defined and explained in the subsequent drawings.

In order to make the objectives, technical solutions and advantages of the present invention clearer, the implementations of the present invention will be described in further detail below in conjunction with the drawings.

This embodiment provides an aerosol-generating product used with an electrically heated aerosol-generating device. The aerosol-generating product includes a smoking section in which a smoking material is contained. The electrically heated aerosol-generating device includes a heating element, and the heating element can heat the smoking section in a manner of being inserted into the smoking section, thereby producing aerosol, such as nicotine smoke. The aerosol-generating product of this embodiment may be, for example, a solid cartridge or a cigarette containing a filter section and a smoking section. The smoking section of this embodiment may further be a cylindrical smoking section. The smoking material may specifically be a tobacco material.

The smoking section of this embodiment satisfies the following conditions: the maximum heat conduction area thermal resistance $\frac{\delta}{\lambda_e}$ of the smoking section satisfies: $0.01 < \frac{\delta}{\lambda_e} < 0.06$, and the unit of $\frac{\delta}{\lambda_e}$ is m²·K/W, where $\delta$ is the maximum radial heating distance of the smoking section in the unit of m, representing the distance between the surface of the heating element and the smoking material at the farthest point in the normal direction of the surface; and $\lambda_e$ is the effective heat conduction coefficient of the smoking section in the unit of W/mK.

According to research findings, there is a significant negative correlation between the heating efficiency of the smoking section and the maximum heat conduction area thermal resistance $\frac{\delta}{\lambda_e}$. At the same time, considering the need to avoid problems of burnt smell or uneven heating of the smoking material caused by heat concentration, the inventor finds through research and summary that the situation in which the maximum heat conduction area thermal resistance $\frac{\delta}{\lambda_e}$ satisfies: $0.01 < \frac{\delta}{\lambda_e} < 0.06$ can ensure the proper heat conduction effect of the smoking section when it is heated by the inserted heating element, and the heating efficiency can be remarkably improved in case of conforming to the above range.

The effective heat conduction coefficient $\lambda_e$ of the smoking section is obtained through calculation according to the following formula: $\lambda_e = \varepsilon \lambda_a + (1 - \varepsilon)\lambda_s$. $\varepsilon$ is the void ratio of the smoking section, namely the ratio of the void volume of the smoking section to the total volume of the smoking section. $\lambda_a$ is the heat conduction coefficient of the void of the smoking section in the unit of W/m K. $\lambda_s$ is the heat conduction coefficient of the smoking material in the smoking section in the unit of W/m·K.

$\lambda_s$ and $\lambda_a$ are obtained through measurement. The heat conduction coefficient $\lambda_s$ of the smoking material in the smoking section is the heat conduction coefficient of the smoking material at standard atmospheric pressure and room temperature measured by a thermal constant analyzer, and the used apparatus is the thermal constant analyzer Hot Disk TPS 2500 S. In this embodiment, the heat conduction coefficient of the smoking material is 0.07-0.32 W/m·K, and the heat conduction coefficient of the smoking material within this range can achieve appropriate heat conduction effect and aerosol release effect. The heat conduction coefficient $\lambda_a$ of the void of the smoking section is the heat conduction coefficient of air gaps within the smoking material at standard atmospheric pressure and room temperature. Generally, the heat conduction coefficient $\lambda_a$ of the void of the smoking section is about 0.026 W/m·K, that is, the maximum

$$0.01 < \frac{\delta}{0.026\varepsilon + (1-\varepsilon)\lambda_s} < 0.06$$

heat conduction area thermal resistance satisfies .

Further, the smoking section includes the smoking material and the air gaps within the smoking material. The void ratio $\varepsilon$ of the smoking section is determined by the following method: at standard atmospheric pressure and room temperature, the whole smoking material having a certain mass is taken, the mass is $m_s$, and the volume is $V_s$, then the density is $\frac{m_s}{V_s}$ ; and at standard atmospheric pressure and room temperature, a certain amount of smoking section composed of the same smoking material is weighed, the mass is m, and the volume is V, then the volume of the smoking material contained in the smoking section is $\frac{mV_s}{m_s}$ , and the void ratio $\varepsilon$ of the smoking section is $\frac{mV_s}{Vm_s}$ . Further, in the above embodiments, the void ratio $\varepsilon$ of the smoking section satisfies $0.2<\varepsilon<0.6$. The void ratio in this range can ensure the heating efficiency of the aerosol-generating product, and can keep the heat transfer speed in a controllable range during heating, which can not only ensure aerosol release, but also avoid uneven heating. Preferably, the void ratio of the smoking section satisfies $0.25<\varepsilon<0.55$.

Further, the smoking section satisfies $0.01 < \frac{\delta}{0.026\varepsilon + (1-\varepsilon)\lambda_s} < 0.04$ , and the heating efficiency is better.

Preferably, the smoking section satisfies $0.015 < \frac{\delta}{0.026\varepsilon + (1-\varepsilon)\lambda_s} < 0.025$ . More sufficient and uniform heating of tobacco can be achieved within the preferred range.

More preferably, the smoking section simultaneously satisfies $0.01 < \frac{\delta}{0.026\varepsilon + (1-\varepsilon)\lambda_s} < 0.04$ , and the void ratio satisfies $0.2<\varepsilon<0.6$. The void ratio affects the dynamic diffusion speed of heat, and the heat conduction coefficient of the smoking material mainly affects the heat conduction speed.

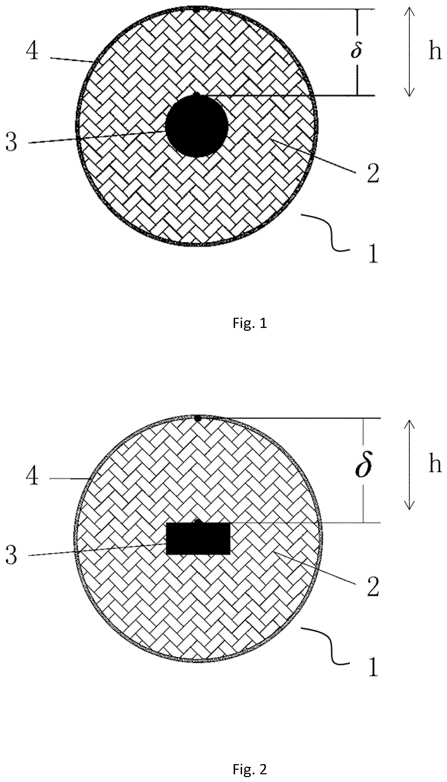

In the above embodiments, the maximum radial heating distance $\delta$ of the smoking section is 0.0025-0.0028 m. The radial dimension range of the smoking section needs to conform to the physiological dimension of human lips. The dimension being too large will cause the lip not to fit tightly with a cigarette holder; and the dimension being too small will cause the difficulty in the insertion of the heating element and will also result in less aerosol available, which will limit the number of intakes. The maximum radial heating distance within the above range can match the heat transfer speed with the heat transfer distance, and ensure that the temperature at the outer peripheral edge of the smoking section is within the range suitable for releasing aerosol or smoking. Moreover, the maximum radial heating distance of the smoking section within the above range can ensure that effective aerosol components can still be released within the predetermined range of the number of intakes. Specifically, referring to Fig. 1 and Fig. 2, Fig. 1 and Fig. 2 are schematic views of the radial section of the smoking section. In the figures, the smoking material 2 is filled in the smoking section 1, and the outside of the smoking section 1 is wrapped with cigarette paper 4. The heating element 3 is inserted into the smoking section 1 and located at the center of the smoking section. The heating element 3 generates heat axially in the center of the smoking section, and the heat is transferred from the center to the periphery. The maximum radial heating distance $\delta$ of the smoking section 1 is the distance between the surface of the heating element 3 and the smoking material 2 at the farthest point in the normal direction of the surface of the heating element 3 (for example, in the h direction in Fig. 1 and Fig. 2). The normal direction is perpendicular to the plane where the heating element 3 intersects. Fig. 1 and Fig. 2 respectively show the heating element 3 in two shapes, namely a heating needle and a heating sheet.

When the heating aerosol-generating device works, the heating element is located inside the aerosol-generating product, including the heating needle, the heating sheet, etc., and its central axis coincides with the longitudinal axis of the aerosol-generating product. The heating element is a central heating element, and the smoking section is suitable for central heating.

As a preferred embodiment of the present invention, the situation in which $0.01 < \frac{\delta}{\lambda_e} < 0.06$ is satisfied, $0.2 < \varepsilon < 0.6$, $\delta$ is 0.0025-0.0028 m and $\lambda_s$ is 0.07-0.32 W/m·K can achieve the optimal heating efficiency and aerosol release effect, and realize even heating and high aerosol uniformity and palatability.

The present invention also proposes an aerosol-generating system, including an aerosol-generating product of each individual embodiment above and an electrically heated aerosol-generating device suitable for heating the aerosol-generating product. The aerosol-generating system of this embodiment has the characteristics of high heating efficiency and favorable aerosol release effect.

Correspondingly, this embodiment also proposes an inspection method of an aerosol-generating product. After research, the inventor finds that the thermal resistance for heat conduction of the aerosol-generating product used with an electrically heated aerosol-generating device has an important influence on the heating efficiency. According to the characteristics of the aerosol-generating product, it is found that the thermal resistance of the smoking section is affected not only by the heat conduction performance of the smoking material in the smoking section, but also by the heat conduction performance of the void in the smoking section, the void ratio and the heating distance in the smoking section. Through deduction and experimental attempts, the inventor obtains a set of parameters that can be used to evaluate the heating efficiency. Whether the parameters are up to standard can be matched to evaluate the heating efficiency. Through the parameters, it can be determined whether the produced aerosol-generating product meets the requirements on the utilization ratio of the smoking material, the aerosol release effect and the overall smoking experience of consumers. In addition, the inventor also studies and obtains the formula for calculating the parameters and the reasonable range of the parameters, and uses the reasonable range of the parameters as the "gold standard" to test whether the aerosol-generating product is qualified, thereby providing a reference basis for evaluating and screening the aerosol-generating product.

Specifically, in the inspection method of the aerosol-generating product of this embodiment, the aerosol-generating product is used with an electrically heated aerosol-generating device. The aerosol-generating product includes a smoking section in which a smoking material is contained. The electrically heated aerosol-generating device includes a heating element. The heating element is insertable into the smoking section. The following inspection steps are included: the void ratio of the smoking section is obtained and is recorded as $\varepsilon$, the void ratio of the smoking section being the ratio of the void volume of the smoking section to the total volume of the smoking section; the heat conduction coefficient $\lambda_a$ of the void of the smoking section is obtained, and the unit is W/m·K; the heat conduction coefficient $\lambda_s$ of the smoking material in the smoking section is obtained, and the unit is W/m K; the effective heat conduction coefficient of the smoking section is obtained through calculation according to a formula, and is recorded as $\lambda_e$, and the unit is W/m·K, wherein the formula is $\lambda_e = \varepsilon\lambda_a + (1-\varepsilon)\lambda_s$; the distance between the surface of the heating element and the smoking material at the farthest point in the normal direction of the surface is obtained, and is recorded as the maximum radial heating distance $\delta$ of the smoking section, and the unit is m; and the maximum radial heating distance $\delta$ of the smoking section is divided by the effective heat conduction coefficient $\lambda_e$ of the smoking section to obtain the maximum heat conduction area thermal resistance in the unit of m²·K/W.

The maximum heat conduction area thermal resistance is defined as $\frac{\delta}{\lambda_e}$, and it is determined whether the maximum heat conduction area thermal resistance $\frac{\delta}{\lambda_e}$ satisfies: $0.01 < \frac{\delta}{\lambda_e} < 0.06$. If so, the aerosol-generating product including the smoking section is determined as being qualified, otherwise as being unqualified.

The obtaining of the heat conduction coefficient $\lambda_a$ of the void of the smoking section includes: the heat conduction coefficient of air gaps within the smoking material at standard atmospheric pressure and room temperature is measured, which is recorded as the heat conduction coefficient $\lambda_a$ of the void of the smoking section; and the obtaining of the heat conduction coefficient $\lambda_s$ of the smoking material in the smoking section includes: the heat conduction coefficient of the smoking material at standard atmospheric pressure and room temperature is measured by a thermal constant analyzer, which is recorded as the heat conduction coefficient $\lambda_s$ of the smoking material in the smoking section.

Further, the above inspection method may further define that the maximum heat conduction area thermal resistance satisfies $0.01 < \frac{\delta}{\lambda_e} < 0.04$. Furthermore, in case that the heat conduction coefficient $\lambda_a$ of the void of the smoking section is 0.026 W/m·K, $0.015 < \frac{\delta}{0.026\varepsilon + (1-\varepsilon)\lambda_s} < 0.025$ is satisfied.

In addition, it may be also defined that $0.2 < \varepsilon < 0.6$, $\delta$ is 0.0025 m-0.0028 m and $\lambda_s$ is 0.07-0.32 W/m·K, so that the parameter requirements for the aerosol-generating product are further increased, thereby optimizing the heating efficiency and aerosol release effect of the aerosol-generating product.

This embodiment also proposes a method for preparing an aerosol-generating product through the above method for inspecting whether the aerosol-generating product is qualified, which includes the following steps:

a smoking section satisfying conditions is prepared: a smoking material capable of producing aerosol through electric heating is prepared; the smoking material is assembled within the smoking section; the electrically heated aerosol-generating device includes a heating element;
the heating element is insertable into the smoking section; the maximum heat conduction area thermal resistance $\frac{\delta}{\lambda_e}$ of the smoking section is detected; and the smoking section is adjusted, so that the maximum heat conduction area thermal resistance $\frac{\delta}{\lambda_e}$ of the smoking section satisfies: $0.01 < \frac{\delta}{\lambda_e} < 0.06$, and the unit of $\frac{\delta}{\lambda_e}$ is m²·K/W, where

$\delta$: the maximum radial heating distance of the smoking section in the unit of m, representing the distance between the surface of the heating element and the smoking material at the farthest point in the normal direction of the surface;
$\lambda_e$: the effective heat conduction coefficient of the smoking section in the unit of W/m·K, satisfying: $\lambda_e = \varepsilon\lambda_a + (1-\varepsilon)\lambda_s$, where
$\varepsilon$: the void ratio of the smoking section, representing the ratio of the void volume of the smoking section to the total volume of the smoking section;
$\lambda_a$: the heat conduction coefficient of the void of the smoking section in the unit of W/m·K; and $\lambda_s$: the heat conduction coefficient of the smoking material in the smoking section in the unit of W/m·K; and

the heat conduction coefficient of the smoking material at standard atmospheric pressure and room temperature is measured by a thermal constant analyzer, which is recorded as the heat conduction coefficient $\lambda_s$ of the smoking material in the smoking section; and the heat conduction coefficient of air gaps within the smoking material at standard atmospheric pressure and room temperature is measured, which is recorded as the heat conduction coefficient $\lambda_a$ of the void of the smoking section. Finally, the smoking section satisfying the conditions is prepared into the aerosol-generating product.

When the prepared smoking section is not within the required range after being inspected by the above inspection method of the aerosol-generating product, it can be determined that the heating efficiency and aerosol release effect of the smoking section are poor, and it is necessary to adjust the preparation process or the performance parameters of the smoking section itself again, such as the void ratio, or the radial dimension of the smoking section, the heat conduction coefficient of the smoking material (the heat conduction coefficient can be improved by adjusting the texture, density and other factors of the smoking material), etc., so as to conform to the range required for the maximum heat conduction area thermal resistance. After adjustment, the smoking section determined as being qualified will finally complete the preparation of the aerosol-generating product. Experimental findings show that when the maximum heat conduction area thermal resistance $\frac{\delta}{\lambda_e}$ of the aerosol-generating product is within the required range, it is found that the radial temperature difference of the aerosol-generating product is small when heated, and the utilization ratio of the smoking material, the aerosol release effect and the smoking experience are better. However, when the maximum heat conduction area thermal resistance $\frac{\delta}{\lambda_e}$ is not within the required range, the aerosol-generating product is easy to have the problem that the inside smoking material close to the heat source has been carbonized at a high temperature but the radial external temperature is still low, or the utilization ratio of the smoking material or the aerosol release effect is poor.

Further, the heat conduction coefficient $\lambda_a$ of the void of the smoking section is 0.026 W/m·K, and the smoking section is prepared, so that the smoking section satisfies: $0.01 < \frac{\delta}{0.026\varepsilon + (1-\varepsilon)\lambda_s} < 0.04$. Furthermore, the smoking section is prepared, so that the smoking section satisfies: $0.015 < \frac{\delta}{0.026\varepsilon + (1-\varepsilon)\lambda_s} < 0.025$.

The void ratio $\varepsilon$ of the smoking section can be obtained in the following manner: the mass of the whole smoking material is obtained at standard atmospheric pressure and room temperature, which is recorded as $m_s$; the volume of the whole smoking material is obtained at standard atmospheric pressure and room temperature, which is recorded as $V_s$; the mass of the smoking section is obtained at standard atmospheric pressure and room temperature, which is recorded as m; the volume of the smoking section is obtained at standard atmospheric pressure and room temperature, which is recorded as V; and the void ratio $\varepsilon$ of the smoking section satisfies: $\varepsilon = \dfrac{mV_s}{Vm_s}$ .

Further, the void ratio $\varepsilon$ of the smoking section is adjusted as $0.2 < \varepsilon < 0.6$. The maximum radial heating distance $\delta$ of the smoking section is adjusted as 0.002-0.003 m, preferably 0.0025-0.0028 m.

The aerosol-generating product obtained by the preparation method in each individual embodiment above is particularly applicable to central heating, and the applicable aerosol-generating device is a device having a central heating element. The central heating element is inserted into the center of the aerosol-generating product. The central heating element is located in the inner center of the smoking section and extends in the axial direction of the smoking section. For example, the central heating element may be a heating needle, a heating sheet, a heating rod, etc.

Next, the aerosol-generating product will be prepared by the preparation method of the above embodiment, in which a reconstituted tobacco sheet used as the smoking material can be prepared by the existing papermaking method or rolling method, and the aerosol-generating product will be heated and detected. The process is specifically as follows:

**Embodiment:**

Smoking material 1: the reconstituted tobacco sheet prepared by the papermaking method: a tobacco material is extracted to obtain an extract solution, the extract solution is concentrated, and the concentrated extract solution is mixed with an aerosol-forming agent; residues after extraction of the tobacco material and pulp board fibers are subjected to paper making, so as to form a paper base; and the concentrated solution containing the aerosol-generating agent is spread onto the paper base, and drying is performed to obtain the reconstituted tobacco finished product. The mass ratio of the aerosol-generating agent and water in the finished product material is about 20% and about 7%, respectively. The heat conduction coefficient of the finished product material measured by a thermal constant analyzer Hot Disk TPS 2500 S at standard atmospheric pressure and room temperature is 0.07 W/m·K.

Smoking material 2: the reconstituted tobacco sheet prepared by the rolling method: tobacco is pulverized to granules of 300 meshes or so; the granules are mixed and stirred with an aerosol-generating agent, an adhesive and water; the resulting product is rolled until a sheet having a thickness of 0.1-0.2 mm is obtained; and then, drying is performed at a temperature of 100°C or so. The mass ratio of the aerosol-generating agent and water in the finished product material is about 20% and about 5%, respectively. The heat conduction coefficient of the finished product material measured by a thermal constant analyzer Hot Disk TPS 2500 S at standard atmospheric pressure and room temperature is 0.32 W/m·K.

Smoking material 3: the smoking material 1 and the smoking material 2 are uniformly blended according to the mass ratio of 13% and 87%, respectively; and the equivalent heat conduction coefficient of the blend measured by a thermal constant analyzer Hot Disk TPS 2500 S at standard atmospheric pressure and room temperature is 0.29 W/m·K.

Smoking material 4: the smoking material 1 and the smoking material 2 are uniformly blended according to the mass ratio of 30% and 70%, respectively; and the equivalent heat conduction coefficient of the blend measured by the thermal constant analyzer Hot Disk TPS 2500 S at standard atmospheric pressure and room temperature is 0.25 W/m·K.

The temperature of the smoking materials 1-4 is measured as the smoking material farthest from the surface of the heating element in the normal direction of the surface of the heating element. According to the void ratio as shown, the smoking materials are weighed as per the corresponding weight, and then wrapped by a packaging material to form the aerosol-generating product. A needle-shaped heating element with a length of 12.5 mm and a radius of 0.001 m is inserted into the smoking sections of the aerosol-generating products that do not conform to the present invention and conform to the present invention, respectively; the axis of the heating element is kept coincident with the axis of each smoking section; and the maximum radial heating distance corresponding to each product is 0.0025 m or 0.0028 m. Under the same input heating conditions, the smoking section of each product is heated for 15 s; and the temperature of the heating body linearly increases from room temperature to about 410°C in the first 7 s and kept at about 410°C in the last 8 s. A J-type thermocouple is used to measure the temperature of the smoking material at the maximum radial heating point in the axial middle of the smoking section. It is found that the temperature of the smoking material at the maximum radial heating point of the product in accordance with the present invention is obviously higher, and the temperature difference between the smoking material at the corresponding maximum radial heating point and the heat source is obviously smaller, which means that the heat can be more effectively transferred to the smoking material at the radial outer layer of the aerosol-generating product. Further, the aerosol-generating product having the parameter values of the maximum heat conduction area thermal resistance and the void ratio of the smoking section can realize the optimization of heat transfer.

The temperature at the maximum radial heating point represents the temperature of the smoking material farthest from the surface of the heating element in the normal direction of the surface of the heating element.

In the examples below, the temperature at the maximum radial heating point for product 1 and product 2 is low, and the heat transfer effect and heating efficiency are poor. Specifically, the heat conduction coefficient of the material or the thermal resistance for heat conduction affects the steady-state heat conduction capability, and the void ratio affects the heat diffusion capability. The maximum heat conduction area thermal resistance and void ratio of products 3-6 meet the requirements, thus ensuring the heat conduction capability and the heat diffusion capability. Therefore, the temperature at the maximum radial heating point is high, and the heat transfer effect is favorable.

Table 1 parameters and performance of aerosol-generating products

| No. | Smoking material | Heat conduction coefficient of smoking material (W/m·K) | Maximum radial heating distance $\delta$ (m) | Void ratio | Maximum heat conduction area thermal resistance (m2·K/W) | Temperature at maximum radial heating point (°C) |
|---|---|---|---|---|---|---|
| Product 1 | 1 | 0.07 | 0.0028 | 0.65 | 0.0676 | 70.1 |
| Product 2 | 2 | 0.32 | 0.0025 | 0.15 | 0.00906 | 54.5 |
| Product 3 | 3 | 0.29 | 0.0028 | 0.5 | 0.0179 | 84.3 |
| Product 4 | 3 | 0.29 | 0.0028 | 0.4 | 0.0153 | 87.4 |
| Product 5 | 4 | 0.25 | 0.0025 | 0.5 | 0.0185 | 93.9 |
| Product 6 | 4 | 0.25 | 0.0025 | 0.4 | 0.0159 | 102.5 |

Although the present invention has been illustrated and described by reference to certain preferred implementations of the present invention, it should be understood by those of ordinary skill in the art that the above content is a further detailed description of the present invention in conjunction with specific implementations, and it cannot be considered that the specific implementation of the present invention is limited to these descriptions. Those skilled in the art can make various changes in form and details, including some simple deductions or substitutions, without departing from the spirit and scope of the present invention.

**Claims**

1. An aerosol-generating product used with an electrically heated aerosol-generating device, comprising a smoking section in which a smoking material is contained; the electrically heated aerosol-generating device comprises a heating element; the heating element is insertable into the smoking section; the maximum heat conduction area

   thermal resistance $\frac{\delta}{\lambda_e}$ of the smoking section satisfies: $0.01 < \frac{\delta}{\lambda_e} < 0.06$ ; and the unit of $\frac{\delta}{\lambda_e}$ is m2·K/W, where

   $\delta$: the maximum radial heating distance of the smoking section in the unit of m, representing the distance between the surface of the heating element and the smoking material at the farthest point in the normal direction of the surface;
   $\lambda_e$: the effective heat conduction coefficient of the smoking section in the unit of W/m·K, satisfying: $\lambda_e = \varepsilon\lambda_a + (1-\varepsilon)\lambda_s$, where
   $\varepsilon$: the void ratio of the smoking section, representing the ratio of the void volume of the smoking section to the total volume of the smoking section;
   $\lambda_a$: the heat conduction coefficient of the void of the smoking section in the unit of W/m K; and
   $\lambda_s$: the heat conduction coefficient of the smoking material in the smoking section in the unit of W/m K.

2. The aerosol-generating product according to claim 1, wherein the heat conduction coefficient $\lambda_s$ of the smoking material in the smoking section is the heat conduction coefficient of the smoking material at standard atmospheric pressure and room temperature measured by a thermal constant analyzer, and the heat conduction coefficient $\lambda_a$

of the void of the smoking section is the heat conduction coefficient of air gaps within the smoking material at standard atmospheric pressure and room temperature.

3. The aerosol-generating product according to claim 1, wherein the heat conduction coefficient $\lambda_a$ of the void of the smoking section is 0.026 W/m·K, and the smoking section satisfies: $0.01 < \dfrac{\delta}{0.026\varepsilon+(1-\varepsilon)\lambda_s} < 0.04$ .

4. The aerosol-generating product according to claim 3, wherein the smoking section satisfies $0.015 < \dfrac{\delta}{0.026\varepsilon+(1-\varepsilon)\lambda_s} < 0.025$ .

5. The aerosol-generating product according to claim 1, wherein the void ratio $\varepsilon$ of the smoking section satisfies: $\varepsilon = \dfrac{mV_s}{Vm_s}$ , where $m_s$ is the mass of the whole smoking material obtained at standard atmospheric pressure and room temperature; $V_s$ is the volume of the whole smoking material at standard atmospheric pressure and room temperature; m is the mass of the smoking section at standard atmospheric pressure and room temperature, and V is the volume of the smoking section at standard atmospheric pressure and room temperature.

6. The aerosol-generating product according to any one of claims 1-5, wherein the void ratio $\varepsilon$ of the smoking section satisfies $0.2<\varepsilon<0.6$.

7. The aerosol-generating product according to any one of claims 1-5, wherein the maximum radial heating distance $\delta$ of the smoking section is 0.0025-0.0028 m.

8. The aerosol-generating product according to any one of claims 1-5, wherein the heat conduction coefficient $\lambda_s$ of the smoking material in the smoking section is 0.07-0.32 W/m·K.

9. The aerosol-generating product according to any one of claims 1-5, wherein the heating element is a central heating element, and the smoking section is suitable for central heating.

10. An aerosol-generating system, comprising an aerosol-generating product according to any one of claims 1-9 and an electrically heated aerosol-generating device suitable for heating the aerosol-generating product.

11. A preparation method of an aerosol-generating product used with an electrically heated aerosol-generating device, comprising the following steps:

preparing a smoking section satisfying conditions: preparing a smoking material capable of producing aerosol through electric heating, assembling the smoking material within the smoking section, the electrically heated aerosol-generating device comprising a heating element, the heating element being insertable into the smoking section, detecting the maximum heat conduction area thermal resistance $\dfrac{\delta}{\lambda_e}$ of the smoking section, adjusting the smoking section, so that the maximum heat conduction area thermal resistance $\dfrac{\delta}{\lambda_e}$ of the smoking section satisfies: $0.01<\dfrac{\delta}{\lambda_e}<0.06$ , and the unit of $\dfrac{\delta}{\lambda_e}$ is m2·K/W, where

$\delta$: the maximum radial heating distance of the smoking section in the unit of m, representing the distance between the surface of the heating element and the smoking material at the farthest point in the normal direction of the surface;
$\lambda_e$: the effective heat conduction coefficient of the smoking section in the unit of W/m·K, satisfying: $\lambda_e=\varepsilon\lambda_a+(1-\varepsilon)\lambda_s$, where
$\varepsilon$: the void ratio of the smoking section, representing the ratio of the void volume of the smoking section to the total volume of the smoking section;

$\lambda_a$: the heat conduction coefficient of the void of the smoking section in the unit of W/m K; and

$\lambda_s$: the heat conduction coefficient of the smoking material in the smoking section in the unit of W/m·K; and

preparing the smoking section satisfying the conditions into the aerosol-generating product.

12. The preparation method of the aerosol-generating product according to claim 11, wherein the heat conduction coefficient of the smoking material at standard atmospheric pressure and room temperature is measured by a thermal constant analyzer, and is recorded as the heat conduction coefficient $\lambda_s$ of the smoking material in the smoking section; and the heat conduction coefficient of air gaps within the smoking material at standard atmospheric pressure and room temperature is measured, and is recorded as the heat conduction coefficient $\lambda_a$ of the void of the smoking section.

13. The preparation method of the aerosol-generating product according to claim 11, wherein the heat conduction coefficient $\lambda_a$ of the void of the smoking section is 0.026 W/m·K, and the smoking section is prepared, so that the smoking section satisfies: $0.01 < \dfrac{\delta}{0.026\varepsilon+(1-\varepsilon)\lambda_s} < 0.04$.

14. The preparation method of the aerosol-generating product according to claim 13, wherein the smoking section is prepared, so that the smoking section satisfies: $0.015 < \dfrac{\delta}{0.026\varepsilon+(1-\varepsilon)\lambda_s} < 0.025$.

15. The preparation method of the aerosol-generating product according to claim 11, wherein the mass of the whole smoking material obtained at standard atmospheric pressure and room temperature is recorded as $m_s$; the volume of the whole smoking material obtained at standard atmospheric pressure and room temperature is recorded as $V_s$; the mass of the smoking section obtained at standard atmospheric pressure and room temperature is recorded as m; the volume of the smoking section obtained at standard atmospheric pressure and room temperature is recorded as V; and the void ratio $\varepsilon$ of the smoking section is obtained in the following manner: $\varepsilon = \dfrac{mV_s}{Vm_s}$.

16. The preparation method of the aerosol-generating product according to any one of claims 11-15, wherein the void ratio $\varepsilon$ of the smoking section is adjusted as $0.2 < \varepsilon < 0.6$.

17. The preparation method of the aerosol-generating product according to any one of claims 11-15, wherein the maximum radial heating distance $\delta$ of the smoking section is adjusted as 0.0025-0.0028 m.

18. The preparation method of the aerosol-generating product according to any one of claims 11-15, wherein the heat conduction coefficient $\lambda_s$ of the smoking material in the smoking section is adjusted as 0.07-0.32 W/m·K.

19. The preparation method of the aerosol-generating product according to any one of claims 11-15, wherein the heating element is a central heating element, and the smoking section is prepared to be suitable for central heating.

20. An inspection method of an aerosol-generating product, wherein the aerosol-generating product is used with an electrically heated aerosol-generating device, the aerosol-generating product comprises a smoking section in which a smoking material is contained, the electrically heated aerosol-generating device comprises a heating element, the heating element is insertable into the smoking section, and the inspection method comprising the following steps:

obtaining the void ratio of the smoking section, which is recorded as $\varepsilon$ and represents the ratio of the void volume of the smoking section to the total volume of the smoking section; obtaining the heat conduction coefficient $\lambda_a$ of the void of the smoking section in the unit of W/m K; obtaining the heat conduction coefficient $\lambda_s$ of the smoking material in the smoking section in the unit of W/m·K; and obtaining the effective heat conduction coefficient of the smoking section, which is recorded as $\lambda_e$ in the unit of W/m·K, through calculation according to a formula, and the formula is $\lambda_e = \varepsilon\lambda_a + (1-\varepsilon)\lambda_s$;
obtaining the distance between the surface of the heating element and the smoking material at the farthest point in the normal direction of the surface, which is recorded as the maximum radial heating distance $\delta$ of the smoking

section in the unit of m; and dividing the maximum radial heating distance $\delta$ of the smoking section by the effective heat conduction coefficient $\lambda_e$ of the smoking section to obtain the maximum heat conduction area thermal resistance in the unit of m²·K/W; and

inspecting whether the maximum heat conduction area thermal resistance $\frac{\delta}{\lambda_e}$ satisfies: $0.01 < \frac{\delta}{\lambda_e} < 0.06$ .

21. The inspection method according to claim 20, wherein obtaining the heat conduction coefficient $\lambda_a$ of the void of the smoking section comprises: measuring the heat conduction coefficient of air gaps within the smoking material at standard atmospheric pressure and room temperature, which is recorded as the heat conduction coefficient $\lambda_a$ of the void of the smoking section; and obtaining the heat conduction coefficient $\lambda_s$ of the smoking material in the smoking section comprises: measuring, by a thermal constant analyzer, the heat conduction coefficient of the smoking material at standard atmospheric pressure and room temperature, which is recorded as the heat conduction coefficient $\lambda_s$ of the smoking material in the smoking section.

22. The inspection method according to claim 20 or 21, wherein if the maximum heat conduction area thermal resistance $\frac{\delta}{\lambda_e}$ satisfies: $0.01 < \frac{\delta}{\lambda_e} < 0.06$ , the aerosol-generating product comprising the smoking section or the smoking section is determined as being qualified, otherwise as being unqualified.

Fig. 1

Fig. 2

**EP 4 226 779 A1**

## INTERNATIONAL SEARCH REPORT

| International application No. |
|---|
| **PCT/CN2022/089547** |

### A. CLASSIFICATION OF SUBJECT MATTER

A24D 1/20(2020.01)i; A24F 40/46(2020.01)i; A24F 40/20(2020.01)i; G01N 25/20(2006.01)i

According to International Patent Classification (IPC) or to both national classification and IPC

### B. FIELDS SEARCHED

Minimum documentation searched (classification system followed by classification symbols)

A24D, A24F, G01N

Documentation searched other than minimum documentation to the extent that such documents are included in the fields searched

Electronic data base consulted during the international search (name of data base and, where practicable, search terms used)

CNPAT, EPODOC, WPI, CNKI: 电子烟, 卷烟, 烟支, 不燃烧, 非燃烧, 加热, 导热性能, 导热系数, 热导率, 混合, 均匀, 温度, 热阻, 面积; electronic w cigarette, cigarette, non w combustion, heat???, thermal w conductivity, temperature, uniform, mix???, thermal w resistance

### C. DOCUMENTS CONSIDERED TO BE RELEVANT

| Category* | Citation of document, with indication, where appropriate, of the relevant passages | Relevant to claim No. |
|---|---|---|
| PX | CN 114176252 A (LTD RESPONSIBILITY COMPANY OF SHANGHAI TOBACCO GROUP et al.) 15 March 2022 (2022-03-15)<br>description, paragraphs [0003]-[0043], and figures 1-2 | 1-22 |
| X | CN 112401297 A (HUBEI CHINA TOBACCO INDUSTRY CO., LTD.) 26 February 2021 (2021-02-26)<br>description, paragraphs [0002]-[0003] and paragraphs [0054]-[0109], and figures 1-8 | 1-22 |
| A | 武晔卿 等 (WU, Yeqing et al.). "嵌入式系统可靠性设计技术及案例解析 (Non-official translation: Embedded System Reliability Design Technology and Case Analysis)"<br>北京航空航天大学出版社 (Beijing University of Aeronautics and Astronautics Press), 30 November 2015 (2015-11-30),<br>pages 65-68 | 1-22 |
| A | 于增信 等 (YU, Zengxin et al.). "汽车发动机原理 (Non-official translation: Principles of Automobile Engine)"<br>机械工业出版社 (Mechanical Industry Press), 31 March 2020 (2020-03-31),<br>pages 22-24 | 1-22 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 August 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

<table>
<tr><td colspan="2"></td><td>International application No.<br>**PCT/CN2022/089547**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | CN 215270620 U (SHENZHEN WOODY VAPES TECHNOLOGY CO., LTD.) 24 December 2021 (2021-12-24)<br>entire document | 1-22 |
| A | 赵运才 等 (ZHAO, Yuncai et al.). "喷涂涂层微结构调控及其摩擦学特性 (Non-official translation: Microstructure Regulation and Tribological Properties of Sprayed Coatings)"<br>冶金工业出版社 (Metallurgical Industry Press), 31 January 2019 (2019-01-31),<br>pages 29-31 | 1-22 |
| A | US 2014246033 A1 (SURFLAY NANOTEC G.M.B.H. et al.) 04 September 2014 (2014-09-04)<br>entire document | 1-22 |

Form PCT/ISA/210 (second sheet) (January 2015)

**INTERNATIONAL SEARCH REPORT**
Information on patent family members

International application No.

**PCT/CN2022/089547**

| Patent document cited in search report | | | Publication date (day/month/year) | Patent family member(s) | | | Publication date (day/month/year) |
|---|---|---|---|---|---|---|---|
| CN | 114176252 | A | 15 March 2022 | None | | | |
| CN | 112401297 | A | 26 February 2021 | None | | | |
| CN | 215270620 | U | 24 December 2021 | None | | | |
| US | 2014246033 | A1 | 04 September 2014 | AU | 2012217384 | A1 | 10 October 2013 |
| | | | | DE | 102011011676 | A1 | 23 August 2012 |
| | | | | EA | 201391196 | A1 | 28 February 2014 |
| | | | | AU | 2017239608 | A1 | 26 October 2017 |
| | | | | CA | 2863254 | A1 | 23 August 2012 |
| | | | | EP | 2675305 | A2 | 25 December 2013 |
| | | | | BR | 112013021007 | A2 | 26 June 2018 |
| | | | | WO | 2012110258 | A2 | 23 August 2012 |
| | | | | JP | 2014506468 | A | 17 March 2014 |

Form PCT/ISA/210 (patent family annex) (January 2015)